# EUROPEAN PATENT APPLICATION

(11) **EP 1 562 340 A1**
(43) Date of publication of application: **10.08.2005**
(21) Application number: 04002559.5
(22) Date of filing: 05.02.2004
(51) Int. Cl.: H04L 29/06, H04L 12/28, H04L 12/56

(54) **Method and apparatus for establishing a temporary secure connection between a mobile network node and an access network node during a data transmission handover**

(71) Applicant: SIEMENS AKTIENGESELLSCHAFT, 80333 München (DE)
(72) Inventor: Chen, Tianwei, 13353 Berlin (DE); Fan, Changpeng, 10557 Berlin (DE); Herrmann, Sven, 31141 Hildesheim (DE); Schäfer, Günter, 10551 Berlin (DE)

(57) **Abstract**

The present invention relates to a method and network node (MN, ARi+1) for establishing a secure connection between a network node (MN) and a further network node (ARi+1) after a data transmission handover within a communication network. There are steps and means respectively providing a temporary security association (SA) between the network nodes, wherein the data transmission between them is protected immediately after the data transmission handover (t1) and before the security key information for establishing the secure connection is available (t3).

## Description

A method and a network node for establishing a secure connection between a mobile network node and an access network node during a data transmission handover within a communication network

The present invention relates to a method and a network node for establishing a secure connection between a network node and a further network node after a data transmission handover within a communication network. It is particularly used in the field of mobile communication networks.

The communication between mobile (network) nodes and access routers (access network nodes) in an IP based mobility supporting (communication) network can be protected by security associations. If a mobile node (MN) performs a data transmission handover from an access router (AR) to a new one, the existing security association (SA) is interrupted and needs to be re-established between MN and the new AR.

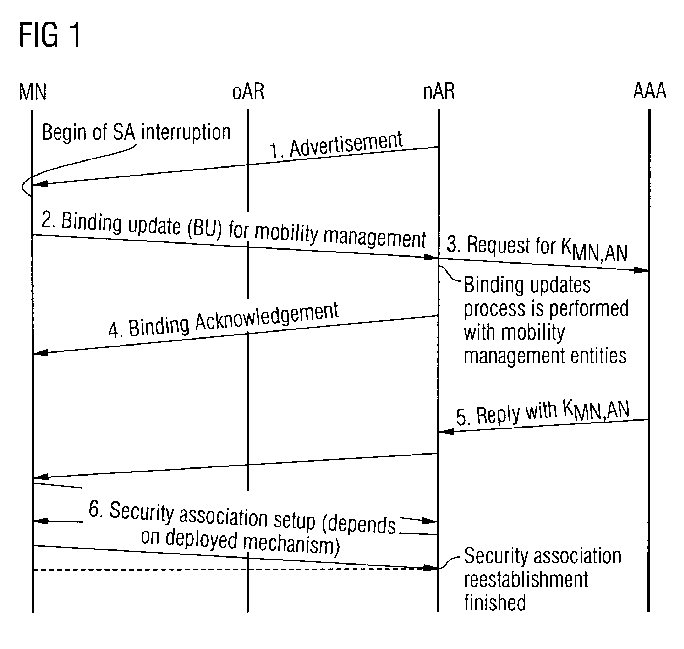

A security association is based on a common secret (i.e. key) between the MN and AR. If the MN performs the handover, the new AR has no knowledge about the key. Therefore it has to contact an Authentication, Authorization and Accounting AAA entity in the network and requests the required key. Depending on the distance to the AAA entity, its workload and other circumstances in the network, the establishment of the new SA can take several seconds and makes it impossible to deploy this mechanism in scenarios where nearly seamless handovers are required, e.g. in voice applications. Figure 1 shows the required message exchanges.

Due to the described fact, two possibilities exist if the standard process is deployed. The first one would be that the user data exchange between MN and AR is interrupted, as long as the new SA has not been re-established. This would have a recognizable negative impact to the user's subjective impression of the network's quality of service (QoS). The second one would be the transmission of the data over the insecure wireless connection immediately after a handover and before the new SA is established. But the interruption of the secure connection offers malicious entities the opportunity to launch various attacks. An attacker can e.g. start Denial of Service (DoS) attacks, eavesdrop information or gain illegitimated service from the access network.

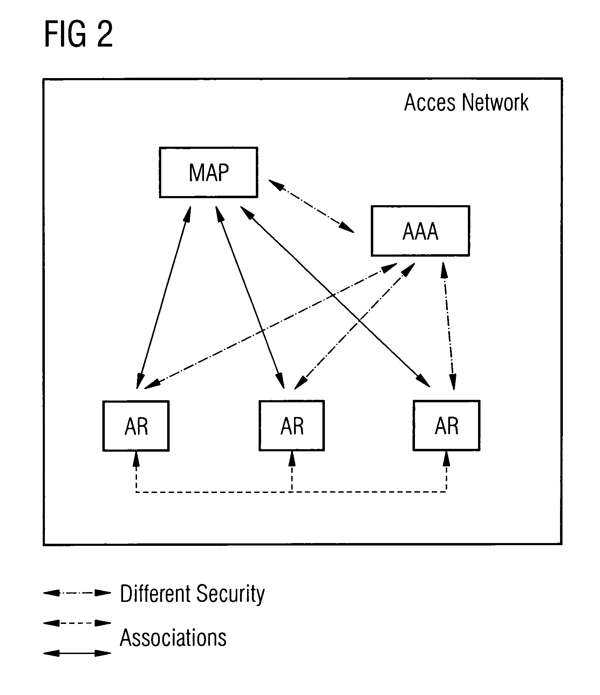

We assume that an AAA architecture as shown in Figure 2 exists in the access network which is visited by the MN and in which the handover is performed. There is always a security association (SA) between the mobility management entity (e.g. mobility anchor point MAP) and each access router AR, between the AAA entity and each AR, between MAP and AAA, and between the ARs in the same access network.

If the mobile node or the access router would not interrupt the communication as long as the reestablishment of the security association will take and perform the insecure emission of user and signaling data, an attacker would have the following possibilities:
- *Eavesdropping.* The attacker can read the information which is exchanged between MN and AR.
- *Masquerading.* He can claim that he has the identity of the MN or AR.
- *Modification or deletion of data.* He can systematically change data during the exchange.
- *Authorization violation.* The attacker uses a service he is not authorized to.
- *Forgery of information.* By claiming that the attacker has another identity he can generate false information.

Up to now, there is no solution which explicitly addresses the security of data exchanges during a handover. Several efforts have been made to secure the connection of a mobile node to the access network after a handover.

The Diameter Mobile IP Application (for IPv4 and v6) provides a mechanism to combine mobility management and AAA signaling. However, it does not offer the opportunity to establish a secure connection between a MN and a new AR immediately after a handover before the AR receives an answer to a request to an AAA entity.

One possible solution might be to transfer the information about existing security associations from the old AR to the new one. This is referred as context transfer in the literature (for example, see [1]). In this case, an existing SA can be immediately reused after the handover. However, this process has some disadvantages. It assumes that the old access router knows the new one in order to proactively transfer the relevant information to it. To determine the new AR is a non-trivial task which depends on the availability of e.g. special data link layer mechanisms. Furthermore, the signaling procedure becomes more complex, as an additional transfer is needed between the new access router and the old access router. Finally, the message exchanges, e.g. for mobility management have to be performed in addition to the communication between the MN and the new access router.

The approach of optimizing micro-mobility was pursued without having to use context transfer [2]. It is important to make the handover fast and secure.

It is therefore an object of the present invention to provide a method and a network node for establishing a secure connection between a network node and a further network node after a data transmission handover within a communication network in order to improve the security of said connection immediately after the data transmission handover.

This object is achieved by a method and a network node using the steps and the arrangements respectively which are mentioned in the independent claims. Further advantageous embodiments of the invention are described in the dependent claims.

It is an aspect of the invention to provide a temporary security association between the network nodes, wherein the data transmission between them is protected immediately after the data transmission handover and before the security key information for establishing the secure connection is available.

In order to defend against this kind of attacks, the invention provides a mechanism to establish a temporary security association between the MN and the new AR which allows the protected exchange of user data immediately after a handover and simultaneously protects other signaling information without involving the time consuming information exchanges with the AAA entities. The communication with the AAA entity happens in parallel and after finishing it, the temporary security association is replaced by a definite one.

The scheme is especially suitable for local mobility, where the signaling overhead is reduced and fast messages exchanges with low latency and short interruptions are required. This invention applies particularly in the intra-domain handover cases and makes use of the efficient combination of mobility, QoS and security signaling to reduce handover latency by performing it in parallel.

An aspect of the invention is to protect the exchange of user and signaling data over the wireless link between a MN and an AR as soon as the MN performed a handover. When an MN moves from one AR (old AR) to another AR (new AR) in the access network (namely intra-domain handover), it wants to keep access to the network without interruption, neither for mobility support, QoS provisioning nor security.

The invention deals with several security aims, which are achieved by different mechanisms. The general one is the establishment of a temporary SA between the MN and the new AR. This process requires the exchange of keys and parameter, which are relevant for the concretely deployed mechanism for the SAs (e.g. IPSec, see Section 5).

The distribution of the required keys for the temporary SA with a standard protocol or mechanism is very complex and expensive with regard to the required message exchanges between the involved entities. In this invention, we provide a key distribution mechanism which is integrated in the handover procedure and reduces the communication overhead.

Another important problem is the influence of the temporary SA establishment on the security of the former and following communication between MN and AR. The invention solves this problem by strictly distinguishing between keys which are used for the different SAs. If an attacker would be able to crack the temporary SA somehow and determine the used key, the backward secrecy is still given because another key than that for the previous connection is used, and even if the attacker would have recorded the whole previous communication he could not decrypt it afterwards. The forward secrecy is provided by encryption of the key for the definite SA with another key, which is independent from the ones exchanged during the establishment.

Aside from the security issues, the performance of the process is very important. Therefore, the exchange of the messages is combined with the signaling data for e.g. QoS reservation and actions which have to be executed for the mobility management. In the latter case, this can be the renewal of registration information at the responsible entity, e.g. mobility anchor point (HMIPv6). The signaling information combination is required to reduce the handover latency and to make IP based mobility supporting networks even suited for real time sensitive applications. By transmitting all relevant information, a temporary security association will be established with a minimum of latency and required message exchanges for this time interval.

The exchange of the signaling messages for the SA setup needs additional protection. Different values are included in the messages to guarantee confidentiality and data integrity.

Briefly, it is proposed to secure the data exchanged between an MN and a new AR while the handover operation is still in progress with a *temporary security association* which utilizes a preliminary session key. Therefore it is differentiated between two kinds of security associations between MNs and ARs: definitive SAs, for which session keys K_{MN,AR} are distributed with a longer lasting key K_{MN}, AN (key between mobile node and whole access network AN for authentication and key management purposes), and *temporary SAs*, for which session keys TK_{MN,AR} are distributed with the help of a temporary key distribution key TmpKeyDistKey_{AN}, that is known to the whole access network (but not to the mobile nodes). Our setup procedure for the temporary SAs is combined with the mobility management signaling and the temporary SAs are used until a definite security association can be set up.

In the following, the present invention will be described in greater detail on the basis of preferred embodiments with reference to the accompanying drawings, in which:
Figure 1 shows a principle diagram concerning required message exchanges and duration of SA interruption according to a standard case (described above),
Figure 2 shows a principle diagram of an access network with security associations as described above,
Figure 3 shows the trust model and the keys used in the different SAs according to the invention,
Figure 4 shows an overview of the security association establishment during handover,
Figure 5 shows an architecture of the sample network, and
Figure 6 schematically shows a message flow for the SA establishment.

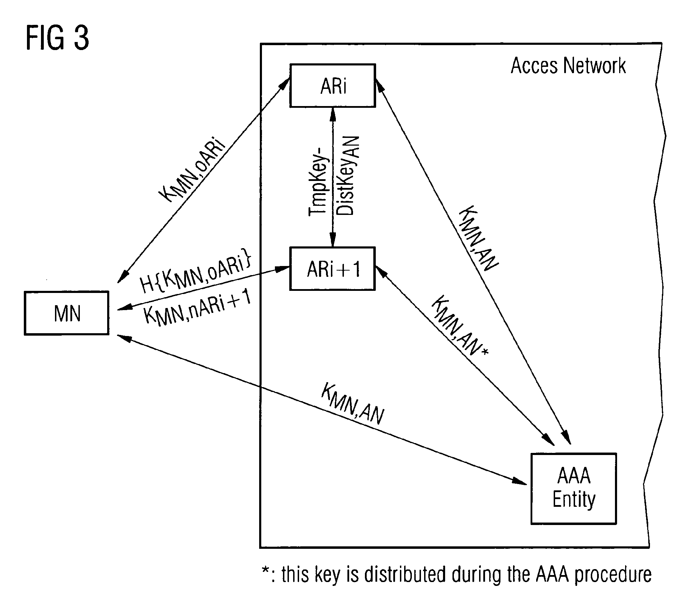

Figure 3 summarizes the trust model and the keys used in the different SAs.

In the following a detailed description of the invention is presented.

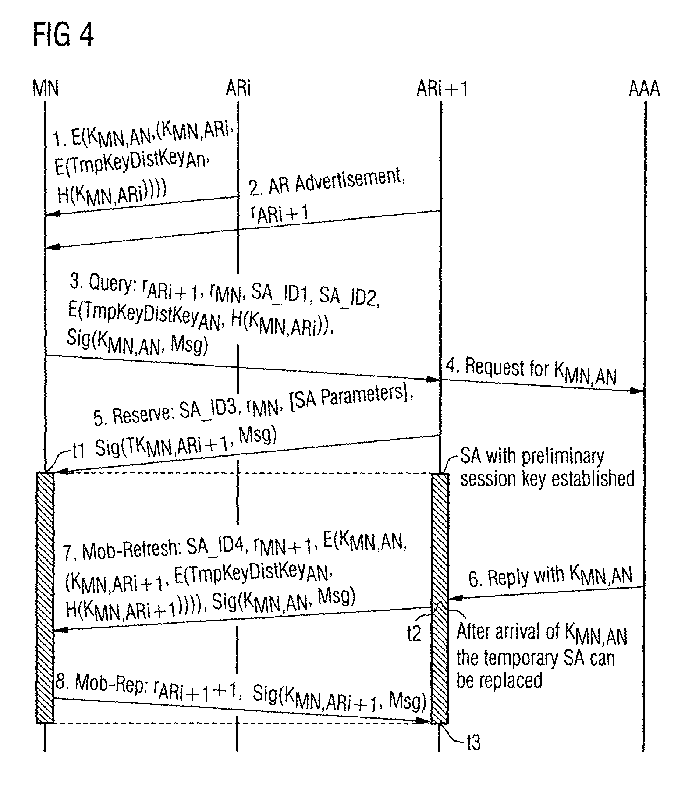

Figure 4 gives an overview of the security association establishment procedure during handover. The explanations in detail:
1. During the prior registration procedure with the old access router all relevant information is exchanged to establish an SA with key K_{MN,ARi} between the MN and the (old) access router ARi. Under protection of the key K_{MN,AN} the mobile node is also communicated an encrypted version of the temporary session key TK_{MN,ARi+1} for later communication with the new access router ARi+1. The encryption of this key is performed with the key TmpKeyDistKey_{AN} that is known to all access routers in the access network, but not to the mobile nodes. For reasons explained below, we choose the new temporary session key TK_{MN,ARi+1} to be equal to H(K_{MN,ARi}), with H(X) denoting the computation of a one-way hash function over value X, so that all in all this part of the message can be written as E(TmpKeyDistKey_{AN}, H(K_{MN,ARi})), with E (K, X) denoting encryption of X with key K.
2. Later on, when the MN moves, it will receive advertisements from new access routers. These advertisements consist of topological and other information, which enables the MN to make a handover decision if necessary. Additionally, the advertisements contain a random number r_{ARi+1}, which is used as the challenge in a challenge response mechanism to check the validity and currentness of the following response of the MN.
3. When performing a handover to the new access router ARi+1, the mobile node sends together with his registration message the random number r_{ARi+1} provided by the new access router in his advertisement, an own random number r_{MN} and the encrypted temporary session key E(TmpKeyDistKey_{AN}, H(K_{MN},_{ARi})) to the new access router. The new access router decrypts the temporary session key with the key TmpKeyDistKey_{AN} known to it and can then locally set up the temporary security association that will use the key TK_{MN,ARi+1} = H(K_{MN,ARi}). Additionally, information is included in the message on how the temporary security association (SA_ID1) and the definite one (SA_ID2) should be called in direction to the mobile node. The message is signed with a hash value computed over the message and the key K_{MN,AN}.
4. Furthermore the new access router communicates after the mobile node's handover request with the appropriate entities in the access network, that is the MAP for mobility and QoS handling and the local AAA server for checking the authenticity of the request (the request for this contains the signature of the mobile node with the key K_{MN,AN}).
5. As soon as the mobility and QoS specific setup has been finished, the new access router answers to the mobile node with a message containing the mobile nodes random number r_{MN} and additional information on how the temporary security association should be called in direction to the access router as well as other potentially required parameters.
   This message is signed with a hash value computed over the message and the temporary session key TK_{MN,ARi+1}.
   After the mobile node has checked the hash value and the random number r_{MN}, it can locally setup the security association and start secure data exchange with the new access router.
6. Upon successful verification of the authenticity of the MN's request the local AAA server answers to the new access router with the key K_{MN,AN}.
7. Upon reception of this message the new access router randomly selects a new definite session key K_{MN,ARi+1} and the new encrypted key for the next temporary SA E (TmpKeyDistKey_{AN}, H (K_{MN,ARi+1})) and encrypts both with the key K_{MN,AN}. Then it selects new local identifier for the new definite SA and transmits this information together with the encrypted session key, the value r_{MN}+1 and a hash value over the whole message and the key K_{MN,AN} to the mobile node.
8. After the MN has received this message it checks the contained hash value and random number, decrypts the new definitive session key and sets up the new definitive SA. A reply is send to the ARi+1 as acknowledgement. Afterwards communication between the MN and the new AR is secured with the new definitive SA.

This section shows the formal description of the mechanism.

Notation:
MN = mobile node
ARi = old access router
ARi+1 = new access router
AAA = Authentication, Authorization and Accounting entity
SA_ID = Information about the name of the SA in the direction of the sender from the SA_ID.
Sig(K, X) is a cryptographic hash value over the message with key K and serves as a signature.
E(K, X) denotes encryption of X with key K
H(K_{MN,ARi}) = TK_{MN,ARi+1}

1. ARi → MN: (E(K_{MN,AN}, ( K_{MN,ARi}, E(TmpKeyDistKey_{AN}, H(K_{MN,ARi})))))
2. ARi+1 → MN: (Access Router Advertisement, r_{ARi+1})
3. MN → ARi+1: (Query: r_{ARi+1}, r_{MN}, SA_ID1, SA_ID2, E(TmpKeyDistKey_{AN}, H(K_{MN,ARi})), Sig(K_{MN,AN}, Msg))
4. ARi+1 → AAA: (Request for K_{MN,AN})
5. ARi+1 → MN: (Reserve: SA_ID3, r_{MN}, [SA Parameters], Sig (TK_{MN,ARi+1}, Msg))
   Temporary SA is established.
6. AAA → ARi+1: (Reply with K_{MN,AN})
7. ARi+1 → MN: (Mob-Refresh: SA_ID4, r_{MN}+1, E(K_{MN,AN}, (K_{MN,ARi+1}, E(TmpKeyDistKey_{AN}, H (K_{MN,ARi+1})))), Sig(K_{MN,AN}, Msg))
8. MN → ARi+1: (Mob-Rep: r_{ARi+1}+1, Sig(K_{MN,ARi+1}, Msg)

Definite SA is established.

The following important properties are achieved:
- It allows a mobile node to securely exchange data with the new access router in the time between successful establishment of QoS and the completion of the AAA specific authentication check and establishment of a new definitive SA.
- By using the hash value H(K_{MN,ARi}) as the new temporary key it ensures, that an attacker who somehow comes to know the new temporary key can not deduce anything about the definitive session key K_{MN,ARi} agreed between the MN and old access router, because the hash function H can not be inverted. This is particularly important as otherwise the distribution (encryption) of all temporary keys with one key TmpKeyDistKey_{AN} common to all access routers would introduce vulnerabilities. With our method, we ensure that potential vulnerabilities arising out of this key are strictly reduced to the temporary security associations.
- Verification of timeliness based on random numbers. To avoid replay attacks, the messages carry random values which are used in a challenge response mechanism to verify the timeliness of the transmitted information.

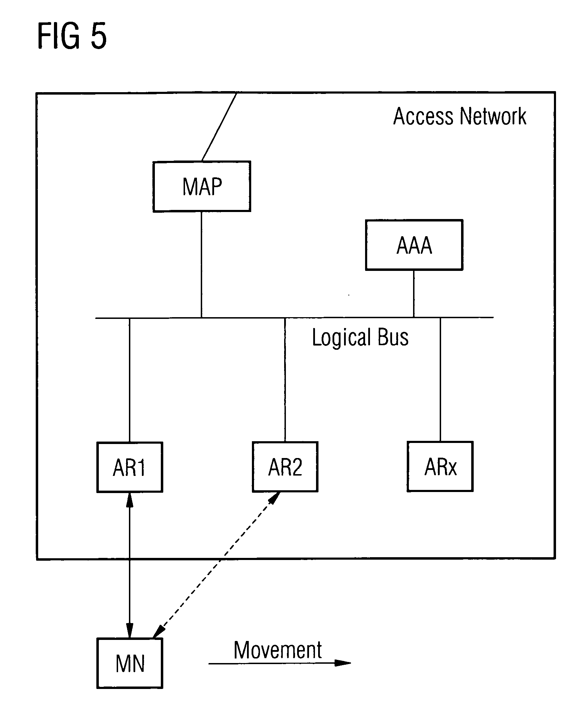

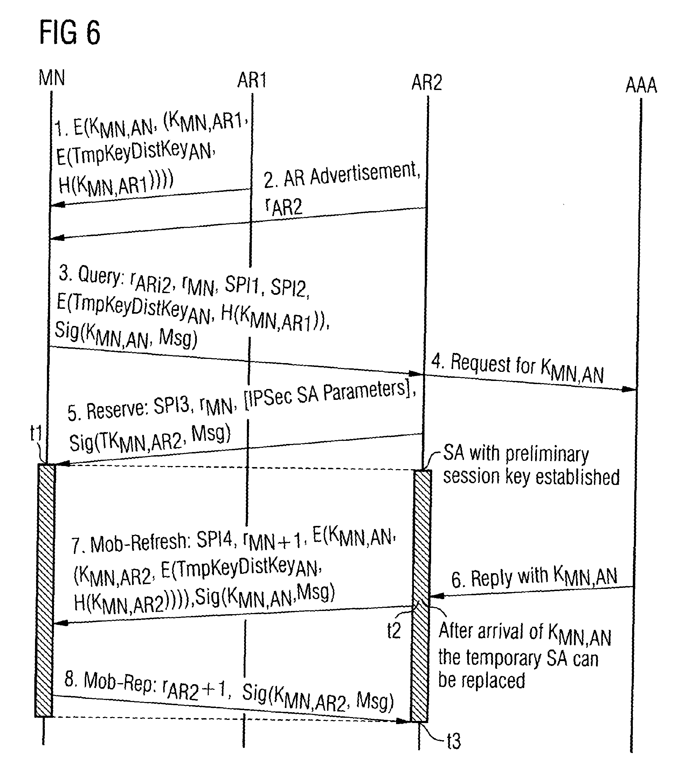

In the following an usage example of the invention is shown. The figures 5 and 6 are related to the architecture of a sample access network, where there is one MAP and some ARs. The MN wants to perform a handover from AR1 to AR2. In this example IPSec is used for the SAs which are established between the MN and ARs.

The MN is connected to AR1. At the beginning of the registration it received the encrypted hash from the key shared between AR1 and MN, H(K_{MN,AR1}). The encryption was performed by the AR1 with the key TmpKeyDistKey_{AN} which is shared among all ARs in the access network. Additionally, the key K_{MN,AR1} is transmitted which serves as the key to secure the data exchange between MN and AR1.

After some time, e.g. due to movement, the MN receives a router advertisement from AR2 and decides to perform a handover to it. It sends a message to AR2 by which it requests new resources (i.e. it tries to reserve bandwidth along a data path) and includes the response to the challenge from AR2, an own challenge, the encrypted hash from the key K_{MN,AR1}, and the signature from the message. AR2 (or an potential attacker who gets to know H(K_{MN,ARi}) somehow) has no possibility to calculate the key K_{MN,AR1} from the previous AR although knowing the hash value. To identify the IPSec security associations which will be established during the process, the Security Parameter Indexes SPI 1 and 2 are included in the message. The AR2 sends the request to the AAA entity and checks in parallel the availability of the requested resources. If the check succeeds, it establishes a SA in the direction to the MN which is identified by SPI1.

At the same time the AR2 sends a reply to the MN. IPSec offers the opportunity to choose different crypto algorithms and formats, authentication algorithms key lifetimes etc. The parameters which were chosen by the AR2 are included in the message. It also contains the response to the challenge from the MN, the SPI3 which should be used for the temporary SA in direction to AR2 and a signature of the message. Additionally, the response for the resource reservation is included.

When the MN receives the message, it establishes the IPSec SA to AR2 using the SPI3 and the transmitted parameters (we assume that all security checks including challenge response mechanisms and signatures succeed during the exchanges). Afterwards, the temporary SA is established and the MN can start transmitting data over it.

After receiving the key K_{MN,AN} from the security entity, AR2 initiates the replacement of the temporary SA by sending a message with the SPI4 for the definite SA identification, a new response to the challenge of the mobile node and the encrypted definite session key K_{MN,ARi+1} and the hash for the next temporary SA to the MN. The message is signed with K_{MN,AN}. At the same time, AR2 establishes a new SA to the MN, using SPI2 as identifier and the new key.

The MN receives the message and establishes a new SA to AR2 with SPI4, also based on the new key. Afterwards, it sends a reply to AR2, using the new SA.

When AR2 receives the reply, the establishment of the definite SAs in both directions is completed. The temporary SA entries using SPI1 and SPI3 can be deleted from the list of the active SAs in the MN and AR2.

References:
[1] J. Loughney, M. Nakhjiri, C. Perkins, R. Koodli, "Context Transfer Protocol", IETF, Internet Draft, draft-ietf-seamoby-ctp-03.txt, June 2003.
[2] S. Hermann, T. Chen, G. Schaefer, C. Fan, "QoS Resource Allocation in Mobile Networks with CASP", IETF, Internet Draft, draft-hermann-casp-qos-mobility-00.txt, June 2003.

## Claims

1. A method for establishing a secure connection between a network node (MN) and a further network node (ARi+1) after a data transmission handover within a communication network **characterized in** providing a temporary security association between the network nodes, wherein the data transmission between them is protected immediately after the data transmission handover and before the security key information (SA) for establishing the secure connection is available.

2. A method according to the previous claim, wherein the network nodes are represented by a mobile network node (MN) and an access network node (ARi+1).

3. A method according to any one of the previous claims, wherein a preliminary session key is used for the temporary security association.

4. A method according to any one of the previous claims, wherein the data transmission handover is an intra domain handover.

5. A method according to any one of the previous claims, wherein the security key information is provided by an Authentication, Authorization and Accounting entity (AAA) within the communication network.

6. A method according to any one of the previous claims, wherein a so called cryptographic hash function (H) is used for forming a preliminary session key.

7. A method according to any one of the previous claims, wherein a common temporary key distribution (TmpKeyDistKey) key is used whose information is available for every access network node within the communication network.

8. A network node (MN, ARi+1) for establishing a secure connection between said network node and a further network node after a data transmission handover within a communication network according to any one of the previous claims, comprising means for providing a temporary security association between said network node and the further network node, wherein the user transmission between them is protected immediately after the data transmission handover and before the security key information (SA) for establishing the secure connection is available.

9. A network node according to the previous claim, wherein the network node is represented by an access network node (ARi+1).

10. A network node according to any one of the previous claims, wherein the network node is represented by a mobile network node (MN).
